(19) Europäisches Patentamt
European Patent Office
Office européen des brevets

(11) **EP 4 134 404 B1**

(12) **EUROPÄISCHE PATENTSCHRIFT**

(45) Veröffentlichungstag und Bekanntmachung des Hinweises auf die Patenterteilung:
**11.09.2024   Patentblatt 2024/37**

(21) Anmeldenummer: **22185157.9**

(22) Anmeldetag: **15.07.2022**

(51) Internationale Patentklassifikation (IPC):
**C09D 5/00** *(2006.01)*      **D21H 19/00** *(2006.01)*

(52) Gemeinsame Patentklassifikation (CPC):
**C09D 5/00; D21H 19/56; D21H 19/58; D21H 27/10**

(54) **BINDEMITTELZUSAMMENSETZUNG FÜR KARTONSTREICHMASSEN**

BINDER COMPOSITION FOR CARDBOARD COATING COMPOSITIONS

COMPOSITION DE LIANT POUR PÂTES DE COUCHAGE POUR CARTONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.08.2021   EP 21190066**

(43) Veröffentlichungstag der Anmeldung:
**15.02.2023   Patentblatt 2023/07**

(73) Patentinhaber: **BASF SE**
**67056 Ludwigshafen am Rhein (DE)**

(72) Erfinder:
• **JEHN-RENDU, Christian**
**67056 Ludwigshafen (DE)**
• **Boerner, Silke**
**67056 Ludwigshafen (DE)**
• **Geiger, Steffen**
**67056 Ludwigshafen (DE)**

(74) Vertreter: **BASF IP Association**
**BASF SE**
**GBI-C006**
**67056 Ludwigshafen (DE)**

(56) Entgegenhaltungen:
WO-A1-2009/156341      WO-A1-2015/155157
WO-A1-2015/155159      US-A1- 2008 081 175

**Beschreibung**

Die Erfindung betrifft eine Streichmasse enthaltend eine wässrige Dispersion eines Vinylacetatpolymerisat und eine Dispersion eines Styrolcopolymerisates.

Eine der wichtigsten Aufgaben von Karton ist seine Funktion als Verpackungsmaterial, wobei eine Vielzahl davon bedruckt wird. Ein faseriges Substrat wie Karton weist jedoch im Vergleich zu Papier eine relativ raue Oberfläche auf. Um seine Bedruckbarkeit, aber auch seine Qualität bezüglich Glätte und Glanz zu verbessern, wird Karton wie auch Papier, mit Streichmassen beschichtet. Wässrige Papierstreichmassen enthalten im Wesentlichen synthetische Bindemittel, Pigment weitere Hilfsstoffe und Wasser. Als Bindemittel für Papierstreichmassen haben sich insbesondere Copolymere auf Basis von Styrol und Butadien und auf Basis von Styrol und Acrylsäureester durchgesetzt.

So lehrt beispielsweise die US 2008/0081175 Styrol/Acrylat-Copolymer als Bindemittel für Papierstreichmassen.

Die WO 2015/155159 und die WO 2015/155157 lehren Polymere erhältlich durch radikalische Polymerisation von Vinylacetat und Acrylaten.

Die WO 2009/156341 lehrt eine Papierstreichmasse enthaltend Metallsalzpigmente und Polymerdispersionen erhältlich durch Polymerisation von anionischen Monomeren und nichtionischen Monomeren.

Die WO 2012/012231 lehrt Vinylacetat/Ethylen-Polymerisate mit vernetzenden Monomeren, die als Bindemittel in Papierstreichmasse zu einer guten Festigkeit und verringertem Rupfen beim Bedrucken führen. Der Ethylengehalt dieser Polymere beträgt 12 und mehr Gew.-Teile bezogen auf 100 Gewichtsteile Monomer.

Die DE 10 2010 063 470 lehrt als synthetisches Bindemittel für Papierstreichmassen eine Kombination eines Styrol-Butadien-Copolymers oder eines Styrol-Acrylsäureester-Copolymers mit jeweils einem Vinylacetat-Ethylen-Polymeren, das mit Polyvinylalkohol stabilisiert ist, zur Verbesserung der Weiße und der Strichporosität von gestrichenen Druckträgern. Die hierbei eingesetzten Mischungen weisen ein Verhältnis von Vinylacetat/Ethylen-Polymerisat zu Styrolcopolymerisat von 25:75 auf.

Die US 2015/0125711 beschreibt Bindemittelzusammensetzungen für Papierstreichmassen aus funktionalisierten Vinylacetat/Ethylen-Polymerisaten und Styrol/Butadien-Polymerisaten wie auch Mischungen aus Vinylacetat/Ethylen-Polymerisaten und Styrol/Acrylat-Polymerisaten. Einige Vinylacetat/Ethylen-Polymerisate sind mit Carboxyl funktionalisiert und weisen einen Ethylenanteil bezogen auf das Polymerisat von 14 Gew.-% oder mehr auf. Mit derartige Streichmassen beschichtete Papiere weisen eine gute Festigkeit und damit verringertes Rupfen auf. Der Gewichtsanteil der funktionalisierten Vinylacetat/Ethylen-Polymerisate am Gesamtbindemittel beträgt 20 bis 80 %.

Allen Schriften ist gemein, dass es um das Streichen von Papier geht. Keine dieser Schriften geht jedoch auf die speziellen Probleme bei der Streicherei von mehrlagigem Karton ein.

Karton ist in der Regel mehrlagig, besteht also aus mehreren Lagen von Papier unterschiedlicher Dicke und teilweise aus unterschiedlichem Material, die ohne Einsatz von Klebstoff miteinander verpresst (vergautscht) werden. Gestrichener Karton wird als Verpackungsmaterial für eine Vielzahl von Produkten verwendet. Im Rahmen der Herstellung einer Verpackung aus Karton werden die Falzlinien zunächst definiert, um beim Falten ein Reißen der Platte zu vermeiden. Oftmals wird beim Falten ein Brechen einer Schicht beobachtet. Dieses Trennen der einzelnen Kartonschichten, oftmals ein Aufbrechen einer weicheren mittlagigen Kartonschicht wird auch als Delaminierung bezeichnet und tritt oft auch während des Druckvorganges auf. Hier verursacht die zähe Druckfarbe auf der Druckwalze eine Zugkraft in z-Richtung der Papieroberfläche, die ebenfalls ein Aufbrechung einer Kartonschicht, die sogenannte "Delaminierung" bewirkt. Die Wirkung dieser Zugkraft in z-Richtung beim Druckvorgang kennt man auch vom Bestreichen von Papier, wobei die Schädigung in dem Fall direkt auf der Oberfläche auftritt da sich Teile des Papierstriches vom Rohpapier lösen, dem sogenannten Rupfen. Während das Rupfen Pigmente auf der Papieroberfläche betrifft, tritt die Schädigung der mehrlagigen Karton in der Faserschicht auf und äußert sich im Entstehen von Wellen.

Aufgabe der vorliegenden Erfindung war, eine Streichmasse zu finden, die die Delaminierung beim Bedrucken von mehrschichtigem Karton verringert. Weiterhin soll damit bestrichener Karton auch eine gute Festigkeit aufweisen, also der Strich kein Rupfen aufweisen.

Die Aufgabe wurde erfindungsgemäß gelöst durch eine Streichmasse enthaltend

(i) eine wässrige Dispersion eines oder mehrerer Vinylacetatpolymerisate, erhältlich durch radikalisch initiierte Emulsionspolymerisation von

| | |
|---|---|
| 77 bis 99 Gew.-% | Vinylacetat, |
| 1 bis 13 Gew.-% | Ethylen und |
| 0 bis 10 Gew.-% | eines oder mehrerer monoethylenisch ungesättigter Monomere, welches weder Vinylacetat noch Ethylen ist, |

wobei sich die Mengen der Monomeren auf 100 Gew.-% aufsummieren,

(ii) eine wässrige Dispersion eines oder mehrerer Styrolcopolymerisate, erhältlich durch radikalisch initiierte Emulsionspolymerisation einer Monomerzusammensetzung enthaltend

| 35 bis 70 Gew.-% | Styrol, |
| 20 bis 60 Gew.-% | eines oder mehrerer Ester der Acryl- und/oder Methacrylsäure mit 1 bis 12 C-Atome aufweisenden Alkanolen, oder eines oder mehrerer konjugierter aliphatischer Diene, |
| 1 bis 10 Gew.-% | eines oder mehrerer Säuregruppen enthaltenden Monomere, |

wobei sich die Mengen der Monomeren auf 100 Gew.-% aufsummieren,
(iii) anorganische Pigmente sowie
(iv) gegebenenfalls weitere Hilfsstoffe,

wobei die Gesamtmenge der Emulsionspolymerisate (i) und (ii) 10 bis 30 Gew.-Teile bezogen auf 100 Gew.-Teile anorganisches Pigment (iii) beträgt und

wobei das Gewichtsverhältnis des Styrolcopolymerisates zum Vinylacetatpolymerisat 77:23 bis 93:7, bevorzugt 90:10 beträgt.

Die Erfindung betrifft auch ein Verfahren zur Herstellung der Streichmasse, ihre Verwendung zum Streichen von Karton, ein Verfahren zum Streichen von Karton mit der Streichmasse und den damit gestrichenen Karton.

Im Folgenden wird die Bezeichnung "(Meth)acryl-" und ähnliche Bezeichnungen jeweils als abkürzende Schreibweise verwendet für "Acryl- und Methacryl-".

Im Folgenden ist unter der Bezeichnung "Karton" ein aus Faserstoff bestehender Formkörper zu verstehen, der eine flächenbezogenen Masse, umgangssprachlich auch als "Flächengewicht" bezeichnet, im Bereich von 150 bis 600 g/m$^2$ aufweist, bestimmt nach DIN EN ISO 536.

Bei den erfindungsgemäß zu verwendenden Polymerdispersionen handelt es sich um Dispersionen von Polymeren in wässrigem Medium. Hierbei kann es sich z.B. um vollständig entsalztes Wasser handeln oder auch um Mischungen aus Wasser und einem damit mischbaren Lösemittel wie Methanol, Ethanol oder Tetrahydrofuran. Vorzugsweise werden keine organischen Lösungsmittel eingesetzt. Die Feststoffgehalte der Dispersionen betragen vorzugsweise von 15 bis 75 Gew.-%, bevorzugt von 40 bis 60 Gew.-%, insbesondere größer 50 Gew.%. Der Feststoffgehalt kann z.B. durch entsprechende Einstellung der bei der Emulsionspolymerisation eingesetzten Wassermenge und/oder der Monomermengen erfolgen. Der pH-Wert der Polymerdispersion wird vorzugsweise auf pH größer 3,5 insbesondere auf einen pH-Wert zwischen 4,5 und 9 eingestellt.

Erfindungsgemäß enthält die Streichmasse ein oder mehrere Vinylacetatpolymerisate (i), erhältlich durch radikalisch initiierte Emulsionspolymerisation aus

| 77 bis 99 Gew.-% | Vinylacetat, |
| 1 bis 13 Gew.-% | bevorzugt 5 bis 13 Gew.-% Ethylen und |
| 0 bis 10 Gew.-% | mindestens eines monoethylenisch ungesättigten Monomers, welches weder Vinylacetat noch Ethylen ist, |

wobei sich die Mengen der Monomeren auf 100 Gew.-% aufsummieren.

Die erfindungsgemäß eingesetzten wässrigen Vinylacetatpolymerisate weisen einen Ethylengehalt von 1 bis 13 Gew.-% bezogen auf das Polymerisat auf. Werden neben Vinylacetat und Ethylen weitere monoethylenisch ungesättigte Monomere verwendet, so weist das Polymer vorteilhaft einen Vinylacetatgehalt ≤ 85 Gew.-% auf.

Als weitere monoethylenisch ungesättigte Monomere kommen in Frage,

- Vinylester geradkettiger oder verzweigter Carbonsäuren mit 3-18 C-Atomen, insbesondere Vinylester einer alpha-verzweigten Carbonsäure mit 9 bis 11 C-Atomen,
- Acryl-, Methacryl-, Malein- oder Fumarsäureester von aliphatischen Alkoholen mit 1-18 C-Atomen,
- Vinylchlorid,
- Isobutylen oder höhere $\alpha$-Olefine mit 4 bis 12 C-Atomen

und deren Mischungen.

Außer der Kombination Vinylacetat und Ethylen sind geeignete Monomerkombinationen z. B. Vinylacetat/Vinylpivalat/Ethylen, Vinylacetat/2-Ethylhexansäurevinylester/Ethylen, Vinylacetat/Methylmethacrylat/Ethylen und Vinylacetat/Vinylchlorid/Ethylen, aus der Gruppe der sogenannten Terpolymere.

Wässrige Dispersionen auf Basis von Vinylacetat und Ethylen sind allgemein bekannt und beispielsweise in der DE 102010063470 beschrieben auf deren Offenbarung ausdrücklich Bezug genommen wird.

Bevorzugt werden Vinylacetatpolymerisat mit einer Glasübergangstemperatur $T_g$ im Bereich von 10 bis 30 °C gemessen nach DIN EN ISO 11357-2 (2013-09). Mit Vorteil liegt die Glasübergangstemperatur der Vinylacetatpolymerisate im Bereich von 15 bis 25 °C insbesondere im Bereich von 15 bis 20°C.

Von Bedeutung ist ferner, dass nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) die Glasübergangstemperatur von höchstens schwach vernetzten Mischpolymerisaten in guter Näherung nach folgender Gleichung abgeschätzt werden kann

$$1/Tg = x_1/Tg^1 + x_2/Tg^2 + \ldots x_n/Tg^n,$$

wobei $x_1$, $x_2$, .... $x_n$ die Massenbrüche der Monomeren 1, 2, .... n und $Tg^1$, $Tg^2$, .... $Tg^n$ die Glasübergangstemperaturen der jeweils nur aus einem der Monomeren 1, 2, .... n aufgebauten Homopolymerisaten in Grad Kelvin bedeuten. Die Glasübergangstemperaturen dieser Homopolymerisate der meisten ethylenisch ungesättigten Monomere sind bekannt (bzw. können in einfacher an sich bekannter Weise experimentell ermittelt werden) und beispielsweise in J. Brandrup, E.H. Immergut, Polymer Handbook 1st Ed. J. Wiley, New York, 1966, 2nd Ed. J. Wiley, New York, 1975 und 3rd Ed. J. Wiley, New York, 1989, sowie in Ullmann's Encyclopedia of Industrial Chemistry, Seite 169, Verlag Chemie, Weinheim, 1992, aufgeführt.

Gemäß einer bevorzugten Ausführungsform wird ein Vinylacetatpolymerisat gewählt, das erhältlich ist durch radikalisch initiierte Emulsionspolymerisation von

| | |
|---|---|
| 82 bis 98 Gew.-% | Vinylacetat, |
| 1 bis 13 Gew.-% | Ethylen und |
| 1 bis 5 Gew.-% | eines oder mehrerer monoethylenisch ungesättigter Monomere, ausgewählt unter Vinylestern von $\alpha$-verzweigten Monocarbonsäuren mit 9 bis 11 C-Atomen, Vinyllaurat, (Meth)acrylsäureester von unverzweigten oder verzweigten Alkoholen mit 1 bis 15 C-Atomen, welche noch 1 bis 40 Gew.-% Ethylen enthalten, |

wobei sich die Mengen der Monomeren auf 100 Gew.-% aufsummieren.

Gemäß einer ebenfalls bevorzugten Ausführungsform sind die Vinylacetatpolymerisate erhältlich durch radikalisch initiierte Emulsionspolymerisation einer Monomerzusammensetzung bestehend aus 87 bis 95 Gew.-%Vinylacetat und 5 bis 13 Gew.-% Ethylen, wobei sich die Mengen der Monomeren auf 100 Gew.-% aufsummieren.

Die Herstellung der Polymerisate erfolgt in bekannter Weise beispielsweise nach Emulsionspolymerisationsverfahren in Gegenwart von Emulgatoren oder vorzugsweise von Schutzkolloiden, vorzugsweise nach dem Emulsionspolymerisationsverfahren wie nachfolgend im Rahmen der Polymerisate (ii) beschrieben wird. Die Polymerisationstemperatur für die Polymerisate (i) beträgt im Allgemeinen 20°C bis 100°C, vorzugsweise 60°C bis 90°C. Bei der Copolymerisation von gasförmigen Comonomeren, wie Ethylen, wird vorzugsweise unter Druck, im Allgemeinen zwischen 5 bar und 100 bar, gearbeitet.

Zur Stabilisierung des Polymerisationsansatzes gebräuchliche Schutzkolloide werden ebenfalls nachfolgend im Rahmen der Polymerisate (ii) aufgeführt.

Die so erhältlichen wässrigen Dispersionen der Polymerisate (i) haben einen Feststoffgehalt von vorzugsweise 30 bis 75 Gew.-%, besonders bevorzugt 50 bis 60 Gew.-%.

Die erfindungsgemäß eingesetzten Styrolcopolymerisate werden ebenfalls in Form einer wässrigen Dispersion eingesetzt. Sie sind erhältlich durch radikalische Emulsionspolymerisation einer Monomerzusammensetzung enthaltend 35 bis 70 Gew.-% Styrol, vorzugsweise 40 bis 65 Gew.-%, bevorzugt zu 40 bis 59 Gew.-% Styrol, und 20 bis 60 Gew.-%, vorzugsweise 30 bis 59 Gew.-% Estern der Acryl- und/oder Methacrylsäure mit 1 bis 12 C-Atome aufweisenden Alkanolen, oder einer Monomerzusammensetzung enthaltend 35 bis 70 Gew.-% Styrol, vorzugsweise 45 bis 70 Gew.-%, bevorzugt zu 50 bis 65 Gew.-% Styrol, und 20 bis 60 Gew.-%, bevorzugt 25 bis 50 Gew.-% eines konjugierten aliphatischen Diens, jeweils bezogen auf 100 Gew.-% Gesamtmonomer.

Styrol in Kombination mit den Estern der Acryl- und/oder Methacrylsäure sind die Hauptmonomeren der sogenannten "Styrolacrylate". Styrol in Kombination mit einem konjugierten aliphatischen Dien sind die Hauptmonomere der Styrol/Diencopolymerisate bzw. im Fall von Butadien der Styrol/Butadiencopolymerisate. Die erfindungsgemäße Streichmasse enthält Dispersionen von Styrolacrylatcopolymerisaten oder Styrol/Diencopolymerisaten oder ihren Mischungen.

Geeignete $C_1$-$C_{12}$-Alkyl(meth)acrylate sind beispielsweise (Meth)acrylsäurealkylester mit einem $C_1$-$C_{12}$-Alkylrest, wie Methylacrylat, Methylmethacrylat, Ethylacrylat, Ethylmethacrylat, n-Propylacrylat, n-Propylmethacrylat, Isopropylacrylat, Isopropylmethacrylat, n-Butyl-acrylat, n-Butylmethacrylat, Isobutylacrylat, Isobutylmethacrylat, sec.-Butylacrylat. sec.-Butyl-methacrylat, tert.-Butylacrylat, tert.-Butylmethacrylat, Pentylacrylate, Pentylmethacrylate, 2-Ethylhexylacrylat, 2-Ethylhexylmethacrylat. Insbesondere sind auch Mischungen der (Meth)acrylsäurealkylester geeignet. Bevorzugt wird n-Butylacrylat.

Als geeignete konjugierte aliphatische Diene sind Butadien-1,3, Isopren, Pentadien-1,3, Dimethylbutadien-1,3 und Cyclopentadien beispielhaft genannt. Aus dieser Gruppe von Monomeren setzt man bevorzugt Butadien-1,3 und/oder Isopren, insbesondere Butadien ein.

Neben den Hauptmonomeren enthält das Styrolcopolymerisat Monomere mit Säuregruppen wie Carbonsäure-, Sulfonsäure- oder Phosphonsäuregruppen einpolymerisiert. Säuregruppen enthaltende Monomere sind ethylenisch ungesättigte Carbonsäuren, ethylenisch ungesättigte Sulfonsäuren und Vinylphosphonsäure und Salze dieser Säuren. Als ethylenisch ungesättigte Carbonsäuren werden vorzugsweise 3 bis 6 C-Atome im Molekül aufweisende $\alpha,\beta$-monoethylenisch ungesättigte Mono- und Dicarbonsäuren eingesetzt. Beispiele hierfür sind Acrylsäure, Methacrylsäure, Itaconsäure, Maleinsäure, Fumarsäure, Crotonsäure, Vinylessigsäure und Vinylmilchsäure. Als ethylenisch ungesättigte Sulfonsäuren eignen sich beispielsweise Vinylsulfonsäure, Styrolsulfonsäure, Acrylamidomethylpropansulfonsäure, Sulfopropylacrylat und Sulfopropylmethacrylat. Besonders bevorzugt sind Acrylsäure und Methacrylsäure, insbesondere Acrylsäure. Die Säuregruppen enthaltenden Monomeren können in Form der freien Säuren sowie in partiell oder vollständig mit geeigneten Basen neutralisierter Form bei der Polymerisation eingesetzt werden. Vorzugsweise verwendet man Natronlauge, Kalilauge oder Ammoniak als Neutralisationsmittel.

Der Gehalt an Säuregruppen enthaltenden Monomeren im Emulsionspolymerisat beträgt erfindungsgemäß 1 bis 10 Gew.-%, bevorzugt 1 bis 8 Gew.-% insbesondere 2 bis 6 Gew.-%.

Gemäß einer ebenfalls bevorzugten Ausführungsform besteht die Monomerzusammensetzung des Styrolcopolymerisats aus

| | |
|---|---|
| 40 bis 59 Gew.-% | Styrol, |
| 40 bis 59 Gew.-% | eines oder mehrerer Ester der Acryl- und/oder Methacrylsäure mit 1 bis 12 C-Atome aufweisenden Alkanolen, |
| 1 bis 10 Gew.-% | eines oder mehrerer Säuregruppen enthaltenden Monomere und |
| 0 bis 9 Gew.-% | eines oder mehrerer sonstiger monoethylenisch ungesättigter Monomere |

wobei sich die Mengen der Monomeren auf 100 Gew.-% aufsummieren.

Als derartige sonstige Monomere kommen monoethylenisch ungesättigte Verbindungen in Betracht, die weder Styrol, noch Ester der Acryl- und/oder Methacrylsäure mit 1 bis 12 C-Atome aufweisenden Alkanolen, noch Säuregruppen enthaltende Monomere sind. Beispiele hierfür sind ethylenisch ungesättigte Carbonsäureamide wie insbesondere Acrylamid und Methacrylamid, ethylenisch ungesättigte Carbonsäurenitrile wie insbesondere Acrylnitril und Methacrylnitril, Vinylester von gesättigten $C_1$- bis $C_{18}$-Carbonsäuren, vorzugsweise Vinylacetat, Allylester gesättigter Carbonsäuren, Vinylether, Vinylketone, Dialkylester ethylenisch ungesättigter Dicarbonsäuren, N-Vinylpyrrolidon, N-Vinylpyrrolidin, N-Vinylformamid, N,N-Dialkylaminoalkylac-rylamide, N,N-Dialkylaminoalkylmethacrylamide, N,N-Dialkylamino-alkylacrylate, N,N-Dialkyla-minoalkylmethacrylate, Vinylchlorid und Vinylidenchlorid. Diese Gruppe von Monomeren wird gegebenenfalls zur Modifizierung der Polymeren eingesetzt.

Bevorzugte sonstige Monomere sind Monomere, die Hydroxylgruppen enthalten, insbesondere $C_1$-$C_{10}$-Hydroxyalkyl(meth)acrylate, und Amide ungesättigter Carbonsäuren, wie (Meth)acrylamid.

Die Monomerzusammensetzung des Styrolcopolymerisats enthält gemäß einer bevorzugten Ausführungsform kein sonstiges Monomer.

Bevorzugt werden Dispersionen eines oder mehrerer Styrolcopolymerisate, enthaltend, bevorzugt bestehend aus,

| | |
|---|---|
| 40 bis 59 Gew.-% | Styrol, |
| 40 bis 59 Gew.-% | eines oder mehrerer Ester der Acryl- und/oder Methacrylsäure mit 1 bis 12 C-Atome aufweisenden Alkanolen, vorzugsweise n-Butylacrylat, und |
| 1 bis 10 Gew.-% | eines Säuregruppen enthaltenden Monomers, |

wobei sich die Mengen der Monomeren auf 100 Gew.-% aufsummieren, in einpolymerisierter Form.

Derartige Styrolcopolymerisate sind allgemein bekannt und sie wie auch ihre Herstellung beispielsweise in der WO 2009/047233 beschrieben.

Bei der Emulsionspolymerisation werden in der Regel ionische und/oder nicht-ionische Emulgatoren und/oder Schutzkolloide bzw. Stabilisatoren als grenzflächenaktive Verbindungen verwendet, um die Dispergierung der Monomeren in dem wässrigen Medium zu unterstützen. Schutzkolloide sind polymere Verbindungen, die bei Solvatation große Mengen Wasser binden und in der Lage sind, Dispersionen von wasserunlöslichen Polymeren zu stabilisieren. Im Gegensatz zu Emulgatoren erniedrigen sie in der Regel die Grenzflächenspannung zwischen Polymerpartikeln und Wasser nicht. Eine ausführliche Beschreibung geeigneter Schutzkolloide findet man in Houben-Weyl, Methoden der organischen Chemie, Band XIV/1, Makromolekulare Stoffe, Georg-Thieme-Verlag, Stuttgart, 1961, Seiten 411 bis 420. Falls Emulgatoren und/oder Schutzkolloide als Hilfsmittel zum Dispergieren der Monomeren mit verwendet werden, betragen die davon verwendeten Mengen beispielsweise 0,1 bis 5 Gew.-%, bezogen auf die Monomeren. Die grenzflächenaktive Substanz wird üblicherweise in Mengen von 0,1 bis 10 Gew.-%, bezogen auf die zu polymerisierenden Monomeren verwendet.

Die Emulsionspolymerisation erfolgt in der Regel bei 30 bis 130 °C, vorzugsweise 50 bis 90 °C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich oder auch stufenweise zuführt.

Bei der Emulsionspolymerisation können die üblichen und bekannten Hilfsstoffe, wie z.B. wasserlösliche Initiatoren und Regler eingesetzt werden.

Gemäß einer bevorzugten Ausführungsform werden Styrolcopolymerisat, insbesondere Styrolacrylatpolymerisate bevorzugt, die erhältlich sind durch radikalisch initiierte Emulsionspolymerisation in Gegenwart von 10 bis 80 Gew.-%, bezogen auf Gesamtmonomer des Styrolcopolymerisats, einer abgebauten Stärke.

Styrolacrylatpolymerisate, die in Gegenwart einer abgebauten Stärke hergestellt wurden, werden beispielsweise in der EP 2580257 beschrieben, auf deren Lehre ausdrücklich Bezug genommen wird.

Styrol/Dien-Polymerisate, insbesondere Styrol/Butadien-Polymerisate, die die in Gegenwart einer abgebauten Stärke hergestellt wurden, werden beispielsweise in der EP 2197925 beschrieben, auf deren Lehre ausdrücklich Bezug genommen wird.

Unter "abgebauter Stärke" versteht der Fachmann eine Stärke, deren Polymerkette unter Spaltung von glykosidischen Bindungen abgebaut wurde. Sie umfasst daher weniger Wiederholungseinheiten als die Polymerkette der zugrundeliegenden native Stärke. Der Abbau der Stärke zeigt sich beispielsweise in ihrer intrinsischen Viskosität.

Als Ausgangsstärken zur Herstellung der bevorzugt zu verwendenden abgebauten Stärken eignen sich alle nativen Stärken wie Stärken aus Mais, Weizen, Hafer, Gerste, Reis, Hirse, Kartoffeln, Erbsen, Tapioka, Sorghum oder Sago. Von Interesse als Ausgangsstärken sind außerdem solche natürlichen Stärken, die einen hohen Amylopektingehalt aufweisen wie Wachsmaisstärke und Wachskartoffelstärke. Der Amylopektingehalt dieser Stärken liegt oberhalb von 90 %, meistens bei 95 bis 100 %.

Der Abbau der Stärken kann enzymatisch, oxidativ oder hydrolytisch durch Einwirkung von Säuren oder Basen erfolgen. Der Abbau von Stärke ist allgemein bekannt und wird beispielsweise in der EP 2197925 beschrieben. Abgebaute Stärken sind im Handel erhältlich. Man kann für die Polymerisation eine abgebaute Stärke einsetzen oder diese in situ herstellen und anschließend in ihrer Gegenwart die Polymerisation durchführen.

Besonders bevorzugt sind abgebaute native Stärken, insbesondere zu Maltodextrin abgebaute native Stärken.

Bevorzugt werden abgebauten Stärken mit einer intrinsischen Viskosität $\eta i$ von $\leq 0,07$ dl/g oder $\leq 0,05$ dl/g. Die intrinsische Viskosität $\eta i$ der abgebauten Stärken liegt vorzugsweise in dem Bereich von 0,02 bis 0,06 dl/g. Die intrinsische Viskosität $\eta i$ wird bestimmt gemäß DIN EN1628 bei einer Temperatur von 23 °C.

Die Dispersionen sind in der Regel monomodale Dispersionen. Gemäß einer bevorzugten Ausführungsform wird eine bimodale Dispersion eingesetzt.

Die erfindungsgemäße Streichmasse enthält die wässrige Dispersion eines oder mehrerer Vinylacetatpolymerisate (i) und die wässrige Dispersion eines oder mehrerer Styrolcopolymerisate (ii), vorzugsweise Styrolacrylatpolymerisate, und anorganisches Pigment (iii), wobei die Gesamtmenge der Emulsionspolymerisate (i) und (ii) 10 bis 30 Gew.-Teile bezogen auf 100 Gew.-Teile anorganisches Pigment (iii) beträgt, wobei das Gewichtsverhältnis des Styrolcopolymerisats zum Vinylacetatpolymerisat 77:23 bis 93:7, bevorzugt 77:23 bis 90:10, insbesondere 80:20 bis 90:10, vor allem 83:17 bis 88:12 beträgt. Vorzugsweise handelt es sich bei den Dispersionen des Vinylacetatpolymerisats und des Styrolcopolymerisats um die Gesamtmenge an Bindemittel.

Besonders bevorzugt wird eine Kombination aus einem Vinylacetatpolymerisat, erhältlich durch radikalisch initiierte Emulsionspolymerisation von

| | |
|---|---|
| 90 bis 99 Gew.-% | Vinylacetat, |
| 1 bis 10 Gew.-% | Ethylen |

und einem Styrolcopolymerisat, erhältlich durch radikalisch initiierte Emulsionspolymerisation einer Monomerzusammensetzung bestehend aus

| | |
|---|---|
| 40 bis 59 Gew.-% | Styrol, |
| 40 bis 59 Gew.-% | eines oder mehrerer Ester der Acryl- und/oder Methacrylsäure mit 1 bis 12 C-Atome aufweisenden Alkanolen, bevorzugt n-Butylacrylat, und |
| 1 bis 10 Gew.-% | Acrylsäure |

wobei sich die Mengen der Monomeren jeweils auf 100 Gew.-% aufsummieren.

Die erfindungsgemäße Streichmasse enthält anorganische Pigmente in einer Menge von vorzugsweise mindestens 80 Gew.-%, z. B. 80 bis 95 Gew.-% oder 80 bis 90 Gew.-%, bezogen auf den Gesamtfeststoffgehalt.

In Betracht kommen insbesondere Weißpigmente. Geeignete Pigmente sind beispielsweise Metallsalzpigmente wie z.B. Calciumsulfat, Calciumaluminatsulfat, Bariumsulfat, Magnesiumcarbonat und Calciumcarbonat, wovon Carbonatpigmente, insbesondere Calciumcarbonat bevorzugt sind. Das Calciumcarbonat kann gemahlenes Calciumcarbonat (GCC, natural ground calcium carbonate), ausgefälltes Calciumcarbonat (PCC, precipitated calcium carbonate), Kalk oder Kreide sein. Geeignete Calciumcarbonatpigmente sind z.B. verfügbar als Covercarb® 60, Hydrocarb® 60 oder Hydrocarb® 90. Weitere geeignete Pigmente sind z.B. Kieselsäuren, Aluminiumoxide, Aluminiumhydrat, Silikate, Titandioxid, Zinkoxid, Kaolin, Tonerde, Talkum oder Siliziumdioxid. Geeignete weitere Pigmente sind z.B. verfügbar als Capim® MP 50 (Clay), Hydragloss® 90 (Clay) oder Talcum C10. Bevorzugt werden Kaolin und/oder Calciumcarbonat (PCC und GCC).

Auf 100 Gew.-Teile Pigmente verwendet man beispielsweise 1 bis 50 Gew.-Teile, vorzugsweise 1 bis 25 Gew.-Teile oder 5 bis 20 Gew.-Teile der erfindungsgemäßen Bindemittelzusammensetzung (fest, d.h. ohne Wasser oder sonstige bei 21 °C, 1 bar flüssige Lösemittel).

Bevorzugt wird eine Streichmasse enthaltend, bevorzugt bestehend aus die Polymerisate (i) und (ii) in einer Gesamtmenge von 10 bis 30 Gew.-Teilen, bezogen auf 100 Gew.-Teile anorganisches Pigment (iii), sowie sowie 5 bis 15 Gew.-Teile eines oder mehrerer Hilfsstoffe, und deren Pigment ausgewählt ist aus der Gruppe bestehend aus Calciumsulfat, Calciumaluminatsulfat, Bariumsulfat, Magnesiumcarbonat, Calciumcarbonat, Kieselsäuren, Aluminiumoxide, Aluminiumhydrat, Silikaten, Titandioxid, Zinkoxid, Kaolin, Tonerde, Talkum und Siliziumdioxid und deren Hilfsstoffe ausgewählt sind aus der Gruppe bestehend aus Verdickern (Rheologiehilfsmittel), Co-Bindemitteln, bevorzugt Polyvinylalkohol und Stärke, optischen Aufhellern, Verlaufshilfsmitteln, Dispergatoren, Tensiden, Gleitmitteln, Neutralisationsmitteln, Entschäumern, Entlüftungsmitteln, Konservierungsmitteln und Farbstoffen.

Als Co-Bindemittel in Betracht kommen Bindemittel auf natürlicher Basis, insbesondere Bindemittel auf Stärkebasis sowie Bindemittel auf Ligninbasis.

Unter Co-Bindemitteln auf Stärkebasis soll in diesem Zusammenhang jegliche native, modifizierte oder abgebaute Stärke verstanden werden. Native Stärken können aus Amylose, Amylopektin oder deren Gemischen bestehen. Bei modifizierten Stärken kann es sich um oxydierte Stärke, Stärkeester oder Stärkeether handeln. Durch Hydrolyse kann das Molgewicht der Stärke verringert werden (abgebaute Stärke). Als Abbauprodukte kommen Oligosaccharide oder Dextrine in Betracht. Bevorzugte Stärken sind Getreide-, Mais- und Kartoffelstärke. Besonders bevorzugt sind Getreide- und Maisstärke, ganz besonders bevorzugt Maisstärke.

Unter Co-Bindemitteln auf Ligninbasis soll in diesem Zusammenhang Kraftlignin und Ligninsulfonat verstanden werden.

Weiterhin sind Polyvinylalkohole als Cobindemittel geeignet.

Es handelt sich vorzugsweise um eine wässrige Streichmasse; sie enthält Wasser insbesondere bereits durch die Zubereitungsform der Bestandteile (wässrige Polymerdispersionen, wässrige Pigment-Slurries); die gewünschte Viskosität kann durch Zugabe von weiterem Wasser eingestellt werden. Übliche Feststoffgehalte der Streichmassen liegen im Bereich von 30 bis 80 Gew.-%. Bevorzugt wird ein Feststoffgehalt im Bereich von 60 bis 75 Gew.-%. Der pH-Wert der Streichmasse wird vorzugsweise auf Werte von 6 bis 11, insbesondere 7 bis 10 eingestellt.

Die vorliegende Erfindung betrifft auch ein Verfahren zur Herstellung der Streichmasse, indem

(i) die wässrige Dispersion eines oder mehrerer Vinylacetatpolymerisate
(ii) die wässrige Dispersion eines oder mehrerer Styrolcopolymerisate,

(iii) anorganische Pigmente sowie

(iv) gegebenenfalls weitere Hilfsstoffe,

(v) gegebenenfalls Wasser vermischt werden,

wobei die Gesamtmenge der Emulsionspolymerisate (i) und (ii) 10 bis 30 Gew.-Teile bezogen auf 100 Gew.-Teile anorganisches Pigment (iii) beträgt und

wobei das Gewichtsverhältnis des Styrolcopolymerisates (ii) zum Vinylacetatpolymerisat (i) 77:23 bis 93:7, bevorzugt 77:23 bis 90:10 beträgt.

Die erfindungsgemäßen Streichmassen eignen sich insbesondere zur Herstellung eines gestrichenen Kartons mit einem Flächengewicht in Bereich vom 150 bis 600 g/m$^2$, bevorzugt im Bereich von 200 bis 350 g/m$^2$.

Gegenstand der Erfindung ist auch ein Verfahren zur Herstellung eines gestrichenen Kartons, indem man

- einen mehrlagigen Karton, der ein Flächengewicht in Bereich vom 150 bis 600 g/m$^2$, insbesondere 200 bis 350 g/m$^2$ aufweist, bereitstellt,
- auf mindestens eine Oberfläche dieses Karton die erfindungsgemäßen Streichmasse derart aufbringt, dass das Auftragsgewicht der Streichmasse als Trockengewicht auf einer Oberfläche des Substrats 5 bis 30 g/m$^2$ beträgt und
- anschließend den beschichteten Karton trocknet.

Der zu beschichtende Karton hat ein Flächengewicht in Bereich vom 150 bis 600 g/m$^2$. Die erfindungsgemäße Streichmasse eignet sich insbesondere zum Beschichten von mehrlagigem Karton. Dabei ist unter "mehrlagig" zu verstehen, dass es sich um zwei, drei, vier oder fünf Lagen von Papier handelt, die miteinander verpresst sind. Diese zugrundeliegenden Papierlagen weisen üblicherweise ein Flächengewicht im Bereich von 20 bis 200 g/m$^2$ auf. Die Summe der Papierlagen ergibt das Flächengewicht des ungestrichenen Kartons. Bevorzugt wird mehrlagiger Karton mit einem Flächengewicht im Bereich von 200 bis 350 g/m$^2$.

Ein handelsüblicher gestrichener Faltschachtelkarton ist beispielsweise aufgebaut aus

- einem Deckstrich mit einem Flächengewicht von 20 g/m$^2$
- einer Mittellage aus gebleichtem chemischen Zellstoff mit einem Flächengewicht von 20 g/m$^2$,
- einer Mittellage aus mechanischem Holzschliff mit einem Flächengewicht von 140 g/m$^2$ und
- einer Unterlage aus gebleichtem chemischen Zellstoff mit einem Flächengewicht von 20 g/m$^2$.

Die auf einer Seite des Kartons aufgebracht Menge an Streichmasse beträgt im Allgemeinen 1 bis 30 g/m$^2$, vorzugsweise 5 bis 30 g (fest, d. h. ohne Wasser oder sonstige bei 21 °C, 1 bar flüssige Lösemittel) pro Quadratmeter.

Die Beschichtung kann eine einfache oder zweifache Beschichtung (Vorstrich und/oder Deckstrich) sein. Die Beschichtung kann durch übliche Auftragsverfahren erfolgen, z.B. mittels Leimpresse, Filmpresse, Bladecoater, Luftbürste, Rakel, Vorhangstreichverfahren (curtain coating) oder Spray-Coater.

Weiterhin ist ein Gegenstand der vorliegenden Erfindung der nach diesem Verfahren erhältliche gestrichene Karton.

Die erfindungsgemäßen Streichmassen haben gute anwendungstechnische Eigenschaften. Sie haben ein gutes Laufverhalten in Papierbeschichtungsverfahren und eine hohe Bindekraft. Die beschichteten Kartonagen haben eine gute Oberflächenfestigkeit, insbesondere eine sehr hohe Trockenrupffestigkeit und geringe Delaminierung. Sie sind in den üblichen Druckverfahren, wie Hochdruck, Tiefdruck, Offsetdruck, Digitaldruck, Flexodruck oder einer Kombination dieser Druckverfahren gut bedruckbar.

Gegenstand der vorliegenden Erfindung ist auch die Bindemittelzusammensetzung, der die erfindungsgemäße Streichmasse zugrunde liegt.

Beispiele

Sofern sich aus dem Zusammenhang nichts anderes ergibt, bedeuten die Angaben in Prozent immer Gewichtsprozent.

Die Angabe eines Gehalts bezieht sich auf den Gehalt in wässriger Lösung oder Dispersion.

Wenn im Rahmen der Beispiele Wasser eingesetzt wurde, wurde demineralisiertes Wasser verwendet.

Messmethoden

Glasübergangstemperatur:

Die Glasübergangstemperatur $T_g$ einer Dispersion wurde generell mit Hilfe eines Differentialkalorimeters Q 2000 der Firma TA Instruments bestimmt. Die Heizrate betrug 10 K pro Minute.

Bestimmung der Viskosität der Streichmasse:

Die Viskosität der Dispersion wurde gemäß ASTM D2196 mit einem Brookfield Viskometer mit RV Spindel 4 bei 100 UpM und bei einer Temperatur von 23°C bestimmt.

Feststoffgehalt:

Der Feststoffgehalt einer Streichmasse oder einer Dispersion wurden bestimmt, indem 0,5 bis 1,5 g der Streichmasse/Dispersion in einer Blechdeckel mit 4 cm Durchmesser verteilt wurde und anschließend in einem Umlufttrockenschrank bei 140°C 30 Minuten getrocknet wurde. Das Verhältnis der Masse der Probe nach Trocknung unter obigen Bedingungen zur Masse bei der Probenahme ergibt den Feststoffgehalt.

Allgemeine Herstellung der Streichmassen:

Die Zubereitung der Streichmasse erfolgte in einem Rühraggregat, in das die einzelnen Komponenten nacheinander zugeführt wurden. Die Pigmente wurden in vordispergierter Form als Aufschlämmung vorgelegt. Anschließend wurde zuerst das Rheologiehilfsmittel zugegeben, dann mit Natronlauge ein pH-Wert von 9 eingestellt und dann das Emulsionspolymerisat zugegeben.

Die Einstellung des Endfeststoffgehalts erfolgte durch die Zugabe von Wasser.

Die Mengenangaben beziehen sich jeweils auf den Feststoff.

| | |
|---|---|
| 100 Gew.-Teile | Calciumcarbonat (Hydrocarb 90 Slurry der Fa. OMYA, Feststoffgehalt 78,6 Gew.-%) |
| 0,11 Gew.-Teile | Rheologiehilfsmittel (Sterocoll FS der Fa BASF SE) |
| 16 Gew.-Teile | Emulsionspolymerisat des jeweiligen Beispiels |

Es wurde ein 3-lagiger ungestrichener Rohkarton mit einem Flächengewicht von 225 g/m$^2$ (4,5 Gew.-% Restfeuchtigkeit) mit der Streichmasse bestrichen. Die Streichmasse wurde mittels einer Laborstreichmaschine einseitig auf den Rohkarton aufgetragen und mittels eines IR-Strahlers auf 4,5 Gew.-% Restfeuchtigkeit getrocknet. Der Auftrag erfolgte nach dem Bladestreichverfahren. Es wurden eine Lage aufgebracht. Das Strichgewicht betrug 10 g/m$^2$ (fest).

Bestimmung der Delaminierung

| | |
|---|---|
| Prinzip: | Zur Bestimmung des Delaminierungsverhaltens einer Streichmasse wird eine gestrichene Kartonprobe mit einer Rupföl-Prüffarbe mit einem IGT Bedruckbarkeitsprüfer AIC 2-5 bedruckt. Durch die Zugkraft der Rupföl-Prüffarbe wird die Oberfläche mehr oder weniger stark beschädigt (Wellenbildung). Umso weniger die Beschädigung, umso weniger Delamierung zeigt die Streichmasse. |
| Vorbereitung: | Aus den zu prüfenden gestrichenen Kartonproben werden 5 Streifen in Laufrichtung der Kartonbahn im Format 340 mm x 40 mm geschnitten. Die Polyurethanwalzen werden in den Walzenstuhl eingesetzt. Auf die linke Walze werden 1,3 ml (+/- 0,01 ml), auf die rechte 0,93 ml (+/- 0,01 ml) mit dem gewählten IGT-Testrupföl (Standard IGT Testing System IGT Rupföl mittlere Viskosität Nr.404.004.020), aufgetragen. Die Verreibezeit beträgt 45 Minuten. Dann werden 2 Metalldruckrädchen auf der linken Walze 90 Sekunden lang eingefärbt und anschließend für weitere 90 Sekunden auf der rechten Walze. Die Druckgeschwindigkeit wird auf einen Wert von 200 cm/s (Standard) bei ansteigender Geschwindigkeit eingestellt, der Liniendruck beträgt 700 N (=350 N/cm). |
| Test: | Ein Kartonstreifen wird auf das Kreissegment gespannt und der Druckvorgang gestartet. |
| Auswertung: | Der bedruckte Kartonstreifen wird nun unter Licht und normalisiert betrachtet und der Beginn der Wellenbildung an der Seite des Druckes mit einem Strich markiert. Die Länge der Strecke vom Druckbeginn bis zu den Markierungen werden zur Bestimmung der Delaminierung herangezogen. Pro Versuchspunkt werden 5 Streifen geprüft. |

Messung der Trockenrupfbeständigkeit mit IGT-Prüfdrucker (IGT trocken):

Es wurden Streifen aus den zu testenden gestrichenen Karton geschnitten und mit dem IGT-Testdrucker bedruckt. Bei den verwendeten Druckfarben handelt es sich um spezifische Prüffarben von Lorilleux, die unterschiedliche Zugkräfte übertragen. Die Prüfstreifen werden mit kontinuierlich steigender Geschwindigkeit (maximale Geschwindigkeit 200 cm/s) durch die Presse geleitet. Zur Auswertung des Ergebnisses wird auf dem Musterdruckstreifen der Punkt bestimmt, an dem nach Druckbeginn 10 Rupfpunkte auf der Papieroberfläche aufgetreten sind.

Das für die Trockenrupfbeständigkeit genannte Maß ist die Geschwindigkeit in cm/s, die zu diesem Zeitpunkt während des Drucks vorhanden ist, sowie die verwendete Testfarbe. Je höher diese Druckgeschwindigkeit am zehnten Rupfpunkt ist, desto besser ist die Qualitätsbewertung der Papieroberfläche.

In den Beispielen wurden die folgende wässrigen Bindemitteldispersionen als Einsatzstoffe verwendet:

SA1: Bimodale Styrol/n-Butylacrylat/Acrylsäure-Dispersion mit einem Feststoffgehalt (FG) von 50 Gew.-% und einer Glasübergangstemperatur $T_g$ von 20°C

SA2: Monomodale Styrol/n-Butylacrylat/Acrylsäure-Dispersion mit FG 50 Gew.-% und $T_g$ von 20°C

SA3: Monomodale Styrol/n-Butylacrylat/Acrylsäure-Dispersion mit FG 50 Gew.-% und hergestellt in der Gegenwart von 10 Gew.-Teilen Maltodextrin (Dextroseäquivalent DE= 18, $M_w$ von 11000 und eine intrinsische Viskosität von $\eta$i 0,052 dl/g) bezogen auf 100 Gew.-Teile Monomer.

Die Monomerzusammensetzung der Styrol/Butylacrylat/Acrylsäure-Polymere betrug bei allen drei Dispersionen 46/50/4.

SB1: Styrol/Butadien/Acrylsäure- Dispersion mit FG 50 Gew.-% und $T_g$ von 20°C

SB2: Styrol-Butadien/Acrylsäure- Dispersion mit FG 50 Gew.-% und Tg von 6°C, hergestellt in der Gegenwart von 60 Gew.-Teilen Maltodextrin (DE= 18, Mw von 11000 und eine intrinsische Viskosität von $\eta$i 0,052 dl/g) bezogen auf 100 Gew.-Teile Monomer

Die Monomerzusammensetzung der Styrol/Butadien/Acrylsäure-Polymere betrug 65/30/5 (SB1) bzw. 57/39/4 (SB2).

D1: Vinylacetat/Ethylen-Copolymer Dispersion (89,5/10,5 Vinylacetat/Ethylen) mit FG 60 Gew.-% und $T_g$ von 10°C

D2: Vinylacetat/Ethylen-Copolymer (87/13 Vinylacetat/Ethylen) Dispersion mit FG 55 Gew.-% und $T_g$ von 5°C

D3: Vinylacetat/Ethylen-Copolymer Dispersion (93,3/6,7 Vinylacetat/Ethylen) mit FG 58 Gew.-% und $T_g$ von 18°C

D4: Vinylacetat Homopolymer Dispersion mit FG 50 Gew.-% und $T_g$ von 33°C

Herstellung der Streichmassen S1 bis S4 (Styrol/Acrylat-Polymerisat (SA1) und Vinylacetat/Ethylen-Polymerisat (D1))

Mit den oben aufgeführten Bindemitteldispersionen wurden Streichmassen hergestellt, bestehend aus

100 Gew.-Teilen Pigment (Omya Hydrocarb 90)
0,11 Gew.-Teilen Rheologiehilfsmittel (Sterocoll FS)
16 Gew.-Teilen Bindemittel (gesamt).

Alle Gewichtsangaben beziehen sich auf den jeweiligen Feststoffgehalt der Komponenten. Das Verhältnis der der beiden Bindemittelpolymere (Styrolacrylatpolymer fest/ Vinylacetat/EthylenPolymerisat fest) ist der Tabelle 1 zu entnehmen. Der Feststoffgehalt der Streichmasse betrug 65 Gew.-%, der pH-Wert lag bei 8,8.

Tabelle 1: Delaminierungswerte in Abhängigkeit von unterschiedlichen Zusammensetzungen von SA1 und D1

| Bsp. | SA1 [Gew.-%] | D1 [Gew.-%] | Delaminierung [cm/s] | % bez.auf Bsp. 1 |
|---|---|---|---|---|
| 1 n.e. | 100 | 0 | 116 | 0 |
| 2 | 90 | 10 | 126 | 8,6 |
| 3 | 80 | 20 | 131 | 12,9 |
| 4 n.e. | 70 | 30 | 135* | 16,4 |
| n.e.: nicht erfindungsgemäß *) es wurde die Delaminierung der Kartonschichten und zusätzlich schon Rupfen der Beschichtung beobachtet. | | | | |

Den Beispielen ist zu entnehmen, dass die Bindemittelzusammensetzung von Beispiel 2 und 3 formuliert als Streichmassen und aufgebracht auf Karton erst bei höheren Zugkräften zur Delaminierung führen, wobei kein Rupfen zu beobachten ist. Diese beiden Streichmassen sind somit besser als die Streichmasse mit reinem Styrolacrylat des Beispiels 1. Beispiel 4 zeigt zwar einen guten Delaminierungswert aber zugleich ist bereits starkes Rupfen zu beobachten. Rupfen bedeutet, dass ein schlechter Strich vorliegt und eine schlechte Oberflächenkohäsion vorliegt.

Herstellung der Streichmassen S5 bis S9 (Styrol/Acrylat -Polymer (SA2) und verschiedene Vinylacetat-Polymerisate)

Mit den oben aufgeführten Bindemitteldispersionen wurden Streichmassen hergestellt, bestehend aus 100 Gewichtsteilen Pigment (Omya Hydrocarb 90), 0,11 Gewichtsteilen Rheologiehilfsmittel (Sterocoll FS) und 16 Gew.-Teilen Bindemittel (Gesamtbindemittel fest). Als Komponenten der Bindemittelzusammensetzungen wurde das Styrol/Acrylat-Copolymer SA2 und verschiedenen Vinylacetat/Ethylencoplymeren gewählt, wobei sich letztere in ihrer Glasübergangstemperatur unterscheiden. Die jeweiligen Zusammensetzungen der beiden Bindemittelkomponenten sind Tabelle 2 zu entnehmen (ebenfalls auf den jeweiligen Feststoffgehalt bezogen). Alle Gewichtsangaben beziehen sich auf den jeweiligen Feststoffgehalt der Komponenten. Der Feststoffgehalt der Streichmasse betrug 65 Gew.-%, der pH-Wert lag bei 8,8.

Tabelle 2: Delaminierungswerte in Abhängigkeit von Zusammensetzungen mit verschiedenen Vinylacetat-Polymeren, die unterschiedliche Glasübergangstemperaturen haben

| Bsp. | SA2 [Gew.-%] | 20 Gew.-% Vinylacetat-Polymer | $T_g$ des Vinylacetat/ Polymers [°C] | Delaminierung [cm/s] | % bez.auf Bsp. 9 |
|---|---|---|---|---|---|
| 5 | 80 | D1 | 10 | 111 | 12,1 |
| 6 n.e. | 80 | D2 | 5 | 106 | 7,0 |
| 7 | 80 | D3 | 18 | 123 | 24,2 |
| 8 n.e. | 80 | D4* | 33 | 97 | -2,1 |
| 9 n.e. | 100 | - | - | 99 | 0 |
| *) anstelle des Vinylacetat/Ethylen-Polymerisats wurde ein Vinylacetat-Homopolymerisat eingesetzt n.e.: nicht erfindungsgemäß | | | | | |

Den Beispielen ist zu entnehmen, dass Bindemittelzusammensetzung mit Vinylacetat/Ethylen-Polymerisaten mit einer $T_g$ im Bereich von 10 bis 25 °C formuliert als Streichmasse und aufgebracht auf Karton zu besseren Delaminierungswerten des Kartons führen als ein reines Styrolacrylat als Bindemittel in der Streichmasse.

Herstellung der Streichmassen S10 bis S15 (Styrol/Acrylat -Polymere (SA1) bzw. (SA2) mit ieweils Vinylacetat/Ethylen-Polymer (D3))

Mit den oben aufgeführten Bindemitteldispersionen wurden Streichmassen hergestellt, bestehend aus

| | |
|---|---|
| 100 Gew. Teilen | Pigment (80 Gew.-Teile Calciumcarbonat und 20 Gew.-Teile Kaolin) |
| 0,9 Gew.-Teilen | Polyvinylalcohol BF-05 |
| 0,12 Gew.-Teilen | Rheologiehilfsmittel (Sterocoll FS (FG: 40%)) |
| 15,5 Gew.-Teilen | Bindemittelpolymer |

Der Feststoffgehalt der Streichmasse betrug 65 Gew.-%, der pH-Wert lag bei 9. Die Zugabe erfolgte nach dieser tabellarischen Reihenfolge.

Diese Streichmasse wurde mit einer Bent-Blade-Pilotanlage (Hersteller Firma Voith) auf einfach vorgestrichenen Rohkarton (Vorstrichgewicht betrug 10 g/m² fest) aufgebracht. Das Strichgewicht betrug 10 g/m² (fest). Alle Gewichtsangaben beziehen sich auf den jeweiligen Feststoffgehalt der Komponenten. Das Verhältnis der beiden Bindemittelpolymere (Styrol/Acrylatpolymer fest/ Vinylacetatpolymer fest) ist der Tabelle 3 zu entnehmen.

Tabelle 3: Delaminierungswerte in Abhängigkeit von Zusammensetzungen mit Vinylacetat/Ethylen-Copolymeren mit unterschiedlichem $T_g$

| Bsp. | SA1 [Gew.-%] | SA2 [Gew.-%] | D3 [Gew.-%] | Delaminierung[1] [cm/s] | IGT Länge (cm/s) |
|---|---|---|---|---|---|
| 10 n.e. | 100 | 0 | 0 | 131 | >400* |
| 11 | 90 | 0 | 10 | 292 | >400* |
| 12 | 80 | 0 | 20 | 326 | >400* |

(fortgesetzt)

| Bsp. | SA1 [Gew.-%] | SA2 [Gew.-%] | D3 [Gew.-%] | Delaminierung[1] [cm/s] | IGT Länge (cm/s) |
|---|---|---|---|---|---|
| 13 n.e. | 0 | 100 | 0 | 103 | >400* |
| 14 | 0 | 90 | 10 | 335 | >400* |
| 15 | 0 | 80 | 20 | 372 | >400* |
| n.e.: nicht erfindungsgemäß | | | | | |
| *) Kein Rupfen beobachtet | | | | | |
| [1] Zur Bestimmung der Delaminierung wurden die 5 Kartonproben in Querrichtung der Kartonbahn im Format 340 mm x 40 mm geschnitten. | | | | | |

Herstellung der Streichmassen S16 bis S19 (Styrol/Butadien-Polymer (SB1) bzw. (SB2) und Vinylacetat/Ethylen-Polymer (D3))

Mit den oben aufgeführten Bindemitteldispersionen wurden Streichmassen hergestellt, bestehend aus

100 Gew.-Teilen Pigment (Omya Hydrocarb 90)
0,11 Gew.-Teilen Rheologiehilfsmittel (Sterocoll FS)
16 Gew.-Teilen Bindemittel (gesamt).

Alle Gewichtsangaben beziehen sich auf den jeweiligen Feststoffgehalt der Komponenten. Das Verhältnis der beiden Bindemittelpolymere (Styrol/Butadien-Polymer fest/ Vinylacetat/Ethylen-Polymer fest) ist der Tabelle 4 zu entnehmen. Der Feststoffgehalt der Streichmasse betrug 65 Gew.-%, der pH-Wert lag bei 8,8.

Tabelle 4: Delaminierungswerte bei gleicher Monomerzusammensetzung des Styrol/Butadien/Acrylsäure-Polymerisats in Abhängigkeit von seiner Herstellung in Gegenwart von abgebauter Stärke

| Bsp. | SB1 [Gew.-%] | SB2 [Gew.-%] | D3 [Gew.-%] | Delaminierung [cm/s] | % bez.auf Bsp. 16 bzw. 18 |
|---|---|---|---|---|---|
| 16 n.e. | 100 | 0 | 0 | 125 | 0 |
| 17 | 80 | 0 | 20 | 152 | 21,6 |
| 18 n.e. | 0 | 100 | 0 | 138 | 0 |
| 19 | 0 | 80 | 20 | 182 | 37,8 |
| n.e.: nicht erfindungsgemäß | | | | | |

Herstellung der Streichmassen S20 bis S23 (Styrol/Butadien-Polymer (SA2) bzw. (SA3) und Vinylacetat/Ethylen-Polymer (D3))

Mit den oben aufgeführten Bindemitteldispersionen wurden Streichmassen hergestellt, bestehend aus

100 Gew.-Teilen Pigment (Omya Hydrocarb 90)
0,11 Gew.-Teilen Rheologiehilfsmittel (Sterocoll FS)
16 Gew.-Teilen Bindemittel (gesamt).

Alle Gewichtsangaben beziehen sich auf den jeweiligen Feststoffgehalt der Komponenten. Das Verhältnis der beiden Bindemittelpolymere (Styrol/Acrylat-Polymer fest / Vinylacetat/Ethylen-Polymer fest) ist der Tabelle 5 zu entnehmen. Der Feststoffgehalt der Streichmasse betrug 66 Gew.-%, der pH-Wert lag bei 8,8.

Tabelle 5: Delaminierungswerte bei gleicher Monomerzusammensetzung des Styrol/Acrylat-Polymerisats in Abhängigkeit von seiner Herstellung in Gegenwart von abgebauter Stärke

| Bsp. | SA2 [Gew.-%] | SA3 [Gew.-%] | D3 [Gew.-%] | Delaminierung (cm/s) | % bez.auf Bsp. 20 bzw. 22 |
|---|---|---|---|---|---|
| 20 n.e. | 100 | 0 | 0 | 103 | 0 |
| 21 | 80 | 0 | 20 | 126 | 22,3 |
| 22 n.e. | 0 | 100 | 0 | 105 | 0 |
| 23 | 0 | 80 | 20 | 129 | 22,8 |
| n.e.: nicht erfindungsgemäß | | | | | |

Bsp. 24 und 25: Vergleichsversuche mit SA2 bzw. D3

Mit den oben aufgeführten Bindemitteldispersionen wurden Streichmassen hergestellt, bestehend aus

100 Gew.-Teilen Pigment (Omya Hydrocarb 90)
0,11 Gew.-Teilen Rheologiehilfsmittel (Sterocoll FS)
16 Gew.-Teilen Bindemittel (gesamt).

Tabelle 6: Delaminierungswerte für die Streichmassen enthaltend SA2 bzw. D3 als Bindemittel

| Bsp. | SA2 [Gew.-%] | D3 [Gew.-%] | Delaminierung (cm/s) |
|---|---|---|---|
| 24 n.e. | 100 | 0 | 103 |
| 25 n.e. | 0 | 100 | 104* |
| *: Die Streifen zeigen zusätzliches Rupfen | | | |

Karton gestrichen mit der Streichmasse des Beispiels 24 bzw. des Beispiels 25 ergeben vergleichbare Delaminierungswerte. Allerdings hat der Karton beschichtet mit der Streichmasse mit D3 als Bindemittel zusätzlich noch eine schlechtere Oberflächenkohäsion da auch Rupfen beobachtet wird. Die erfindungsgemäße Mischung von der beiden Polymerisate SA2 und D3 (Beispiele 21) belegt das Vorliegen einer Synergie, da sowohl ein mit verbesserter Delaminierungswert sowie eine gute Oberflächenkohäsion zu beobachten ist (kein Rupfen).

## Patentansprüche

1.  Streichmasse enthaltend

(i) eine wässrige Dispersion eines oder mehrerer Vinylacetatpolymerisate, erhältlich durch radikalisch initiierte Emulsionspolymerisation von

77 bis 99 Gew.-%     Vinylacetat,
1 bis 13 Gew.-%     Ethylen und
0 bis 10 Gew.-%     eines oder mehrerer monoethylenisch ungesättigter Monomere, welches weder Vinylacetat noch Ethylen ist,

wobei sich die Mengen der Monomeren auf 100 Gew.-% aufsummieren,
(ii) eine wässrige Dispersion eines oder mehrerer Styrolcopolymerisate, erhältlich durch radikalisch initiierte Emulsionspolymerisation einer Monomerzusammensetzung enthaltend

35 bis 70 Gew.-%     Styrol,

(fortgesetzt)

| 20 bis 60 Gew.-% | eines oder mehrerer Ester der Acryl- und/oder Methacrylsäure mit 1 bis 12 C-Atome aufweisenden Alkanolen, oder eines oder mehrerer konjugierter aliphatischer Diene, |
| 1 bis 10 Gew.-% | eines oder mehrerer Säuregruppen enthaltenden Monomere, |

wobei sich die Mengen der Monomeren auf 100 Gew.-% aufsummieren,
(iii) anorganische Pigmente sowie
(iv) gegebenenfalls weitere Hilfsstoffe,
wobei die Gesamtmenge der Emulsionspolymerisate (i) und (ii) 10 bis 30 Gew.-Teile bezogen auf 100 Gew.-Teile anorganisches Pigment (iii) beträgt und
wobei das Gewichtsverhältnis des Styrolcopolymerisates zum Vinylacetatpolymerisat 77:23 bis 93:7 beträgt.

2. Streichmasse nach Anspruch 1, **dadurch gekennzeichnet, dass** das Vinylacetatpolymerisat eine Glasübergangstemperatur $T_g$ im Bereich von 10 bis 30 °C gemessen nach DIN EN ISO 11357-2 (2013-09) aufweist.

3. Streichmasse nach Anspruch 1 oder 2, **dadurch gekennzeichnet, dass** das eine oder mehrere Vinylacetatpolymerisat, erhältlich ist durch radikalisch initiierte Emulsionspolymerisation von

| 82 bis 98 Gew.-% | Vinylacetat, |
| 1 bis 13 Gew.-% | Ethylen und |
| 1 bis 5 Gew.-% | eines oder mehrerer monoethylenisch ungesättigter Monomere, ausgewählt unter Vinylestern von $\alpha$-verzweigten Monocarbonsäuren mit 9 bis 11 C-Atomen, Vinyllaurat oder Vinylestern einer $\alpha$-verzweigten Carbonsäure mit 9 bis 11 C-Atomen, (Meth)acrylsäureestern von Alkoholen mit 1 bis 15 C-Atomen, welche noch 1 bis 40 Gew.-% Ethylen enthalten |

wobei sich die Mengen der Monomeren auf 100 Gew.-% aufsummieren.

4. Streichmasse nach einem der Ansprüche 1 bis 3, **dadurch gekennzeichnet, dass** das Styrolcopolymerisat, erhältlich ist durch radikalisch initiierte Emulsionspolymerisation einer Monomerzusammensetzung enthaltend

| 40 bis 59 Gew.-% | Styrol, |
| 40 bis 59 Gew.-% | eines oder mehrerer Ester der Acryl- und/oder Methacrylsäure mit 1 bis 12 C-Atome aufweisenden Alkanolen, und |
| 1 bis 10 Gew.-% | eines Säuregruppen enthaltenden Monomers |

wobei sich die Mengen der Monomeren auf 100 Gew.-% aufsummieren.

5. Streichmasse nach einem der Ansprüche 1 bis 4, **dadurch gekennzeichnet, dass** das Styrolcopolymerisat erhältlich ist durch radikalisch initiierte Emulsionspolymerisation in Gegenwart von 10 bis 80 Gew.-%, bezogen auf Gesamtmonomer des Styrolcopolymerisats, einer abgebauten Stärke.

6. Streichmasse nach einem der Ansprüche 1 bis 5, **dadurch gekennzeichnet, dass** das Gewichtsverhältnis des Styrolcopolymerisates zum Vinylacetatpolymerisat 80:20 bis 90:10 beträgt.

7. Streichmasse nach einem der Ansprüche 1 bis 6, **dadurch gekennzeichnet, dass** mindestens 80 Gew.-% des Gesamtfeststoffgehaltes der Streichmasse anorganisches Pigment sind.

8. Streichmasse nach einem der Ansprüche 1 bis 7, **dadurch gekennzeichnet, dass** ihr Feststoffgehalt 30 bis 80 Gew.-% beträgt.

9. Verfahren zur Herstellung der Streichmasse gemäß einem der Ansprüche 1 bis 8, indem man

(i) die wässrige Dispersion eines oder mehrerer Vinylacetatpolymerisate

(ii) die wässrige Dispersion eines oder mehrerer Styrolcopolymerisate,

(iii) anorganische Pigmente sowie

(iv) gegebenenfalls weitere Hilfsstoffe,

(v) gegebenenfalls Wasser vermischt,

wobei die Gesamtmenge der Emulsionspolymerisate (i) und (ii) 10 bis 30 Gew.-Teile bezogen auf 100 Gew.-Teile anorganisches Pigment (iii) beträgt und

wobei das Gewichtsverhältnis des Styrolcopolymerisates (ii) zum Vinylacetatpolymerisat (i) 77:23 bis 93:7 beträgt.

10. Verwendung der Streichmasse gemäß einem der Ansprüche 1 bis 8 zur Herstellung eines gestrichenen Kartons mit einem Flächengewicht in Bereich vom 150 bis 600 g/m$^2$.

11. Verfahren zur Herstellung eines gestrichenen Kartons, indem man

- einen mehrlagigen Karton, der ein Flächengewicht in Bereich vom 150 bis 600 g/m$^2$ aufweist, bereitstellt,
- auf mindestens eine Oberfläche dieses Karton eine Streichmasse gemäß einem der Ansprüche 1 bis 8 derart aufbringt, dass das Auftragsgewicht der Streichmasse als Trockengewicht auf einer Oberfläche des Substrats 5 bis 30 g/m$^2$ beträgt und
- anschließend den beschichteten Karton trocknet.

12. Gestrichener Karton, erhältlich nach dem Verfahren gemäß Anspruch 11.

13. Bindemittelzusammensetzung enthaltend

(i) eine wässrige Dispersion eines oder mehrerer Vinylacetatpolymerisate, erhältlich durch radikalisch initiierte Emulsionspolymerisation von

| 77 bis 99 Gew.-% | Vinylacetat, |
|---|---|
| 1 bis 13 Gew.-% | Ethylen und |
| 0 bis 10 Gew.-% | eines oder mehrerer monoethylenisch ungesättigter Monomere, welches weder Vinylacetat noch Ethylen ist, |

wobei sich die Mengen der Monomeren auf 100 Gew.-% aufsummieren,

(ii) eine wässrige Dispersion eines oder mehrerer Styrolcopolymerisate, erhältlich durch radikalisch initiierte Emulsionspolymerisation einer Monomerzusammensetzung enthaltend

| 35 bis 70 Gew.-% | Styrol, |
|---|---|
| 20 bis 60 Gew.-% | eines oder mehrerer Ester der Acryl- und/oder Methacrylsäure mit 1 bis 12 C-Atome aufweisenden Alkanolen, oder eines oder mehrerer konjugierter aliphatischer Diene, |
| 1 bis 10 Gew.-% | eines oder mehrerer Säuregruppen enthaltenden Monomere |

wobei sich die Mengen der Monomeren auf 100 Gew.-% aufsummieren

wobei das Gewichtsverhältnis des Styrolcopolymerisates zum Vinylacetatpolymerisat 77:23 bis 93:7 beträgt.

## Claims

1. A coating slip comprising

(i) an aqueous dispersion of one or more vinyl acetate polymers, obtainable by free-radically initiated emulsion polymerization of

77% to 99% by weight of vinyl acetate,

1% to 13% by weight of ethylene and
0% to 10% by weight of one or more monoethylenically unsaturated monomers that are neither vinyl acetate nor ethylene,
where the amounts of the monomers add up to 100% by weight,

(ii) an aqueous dispersion of one or more styrene copolymers, obtainable by free-radically initiated emulsion polymerization of a monomer composition comprising

35% to 70% by weight of styrene,
20% to 60% by weight of one or more esters of acrylic and/or methacrylic acid with alkanols having 1 to 12 carbon atoms, or of one or more conjugated aliphatic dienes,
1% to 10% by weight of one or more monomers comprising acid groups, where the amounts of the monomers add up to 100% by weight,

(iii) inorganic pigments and
(iv) optionally further auxiliaries,
where the total amount of emulsion polymers (i) and (ii) is 10 to 30 parts by weight based on 100 parts by weight of inorganic pigment (iii) and
where the weight ratio of the styrene copolymer to the vinyl acetate polymer is 77:23 to 93:7.

2. The coating slip according to claim 1, wherein the vinyl acetate polymer has a glass transition temperature $T_g$ in the range from 10 to 30°C, measured to DIN EN ISO 11357-2 (2013-09).

3. The coating slip according to claim 1 or 2, wherein the one or more vinyl acetate polymer(s) is/are obtainable by free-radically initiated emulsion polymerization of

82% to 98% by weight of vinyl acetate,
1% to 13% by weight of ethylene and
2% to 5% by weight of one or more monoethylenically unsaturated monomers selected from vinyl esters of $\alpha$-branched monocarboxylic acids having 9 to 11 carbon atoms, vinyl laurate or vinyl esters of an $\alpha$-branched carboxylic acid having 9 to 11 carbon atoms, (meth)acrylic esters of alcohols having 1 to 15 carbon atoms that also comprise 1 to 40% by weight of ethylene, where the amounts of the monomers add up to 100% by weight.

4. The coating slip according to any of claims 1 to 3, wherein the styrene copolymer is obtainable by free-radically initiated emulsion polymerization of a monomer composition comprising

40% to 59% by weight of styrene,
40% to 59% by weight of one or more esters of acrylic and/or methacrylic acid with alkanols having 1 to 12 carbon atoms, and
1% to 10% by weight of a monomer comprising acid groups, where the amounts of the monomers add up to 100% by weight.

5. The coating slip according to any of claims 1 to 4, wherein the styrene copolymer is obtainable by free-radically initiated emulsion polymerization in the presence of 10% to 80% by weight, based on total monomers of the styrene copolymer, of a degraded starch.

6. The coating slip according to any of claims 1 to 5, wherein the weight ratio of the styrene copolymer to the vinyl acetate polymer is 80:20 to 90:10.

7. The coating slip according to any of claims 1 to 6, wherein at least 80% by weight of the total solids content of the coating slip is inorganic pigment.

8. The coating slip according to any of claims 1 to 7, having a solids content of 30% to 80% by weight.

9. A process for producing the coating slip according to any of claims 1 to 8 by mixing

(i) the aqueous dispersion of one or more vinyl acetate polymers,
(ii) the aqueous dispersion of one or more styrene copolymers,

(iii) inorganic pigments and
(iv) optionally further auxiliaries,
(v) optionally water,
where the total amount of emulsion polymers (i) and (ii) is 10 to 30 parts by weight based on 100 parts by weight of inorganic pigment (iii) and
where the weight ratio of the styrene copolymer (ii) to the vinyl acetate polymer (i) is 77:23 to 93:7.

10. The use of the coating slip according to any of claims 1 to 8 for production of a coated board having a basis weight in the range from 150 to 600 g/m$^2$.

11. A method of producing a coated board by

- providing a multilayer board having a basis weight in the range from 150 to 600 g/m$^2$,
- applying a coating slip according to any of claims 1 to 8 to at least one surface of said board such that the coatweight of the coating slip as dry weight on a surface of the substrate is 5 to 30 g/m$^2$ and
- then drying the coated board.

12. The coated board obtainable by the method according to claim 11.

13. A binder composition comprising

(i) an aqueous dispersion of one or more vinyl acetate polymers, obtainable by free-radically initiated emulsion polymerization of

77% to 99% by weight of vinyl acetate,
1% to 13% by weight of ethylene and
0% to 10% by weight of one or more monoethylenically unsaturated monomers that are neither vinyl acetate nor ethylene,
where the amounts of the monomers add up to 100% by weight,

(ii) an aqueous dispersion of one or more styrene copolymers, obtainable by free-radically initiated emulsion polymerization of a monomer composition comprising

35% to 70% by weight of styrene,
20% to 60% by weight of one or more esters of acrylic and/or methacrylic acid with alkanols having 1 to 12 carbon atoms, or of one or more conjugated aliphatic dienes,
1% to 10% by weight of one or more monomers comprising acid groups,
where the amounts of the monomers add up to 100% by weight,
where the weight ratio of the styrene copolymer to the vinyl acetate polymer is 77:23 to 93:7.

**Revendications**

1. Enduit contenant

(i) une dispersion aqueuse d'un ou de plusieurs polymères d'acétate de vinyle, pouvant être obtenus par polymérisation en émulsion initiée par voie radicalaire de

77 à 99% en poids d'acétate de vinyle,
1 à 13% en poids d'éthylène et
0 à 10% en poids d'un ou de plusieurs monomères éthyléniquement mono-insaturés, qui ne sont ni de l'acétate de vinyle, ni de l'éthylène,
la somme des quantités des monomères valant 100% en poids,

(ii) une dispersion aqueuse d'un ou de plusieurs copolymères de styrène, pouvant être obtenus par polymérisation en émulsion initiée par voie radicalaire d'une composition de monomères contenant 35 à 70% en poids de styrène,

20 à 60% en poids d'un ou de plusieurs esters de l'acide acrylique et/ou méthacrylique avec des alcanols présentant 1 à 12 atomes de carbone ou d'un ou de plusieurs diènes aliphatiques conjugués,
1 à 10% en poids d'un ou de plusieurs monomères contenant des groupes acides, la somme des quantités des monomères valant 100% en poids,

(iii) des pigments inorganiques ainsi que
(iv) le cas échéant d'autres adjuvants,

la quantité totale des polymères en émulsion (i) et (ii) étant de 10 à 30 parties en poids par rapport à 100 parties en poids de pigment inorganique (iii) et
le rapport en poids du copolymère de styrène au polymère d'acétate de vinyle étant de 77:23 à 93:7.

2. Enduit selon la revendication 1, **caractérisé en ce que** le polymère d'acétate de vinyle présente une température de transition vitreuse $T_g$ située dans la plage de 10 à 30°C, mesurée selon la norme DIN EN ISO 11357-2 (2013-09) .

3. Enduit selon la revendication 1 ou 2, **caractérisé en ce que** ledit un ou lesdits plusieurs polymères d'acétate de vinyle peuvent être obtenus par polymérisation en émulsion initiée par voie radicalaire de

82 à 98% en poids d'acétate de vinyle,
1 à 13% en poids d'éthylène et
2 à 5% en poids d'un ou de plusieurs monomères éthyléniquement mono-insaturés, choisis parmi les esters vinyliques d'acides monocarboxyliques ramifiés en position $\alpha$ comprenant 9 à 11 atomes de carbone, le laurate de vinyle ou les esters vinyliques d'un acide carboxylique ramifié en position $\alpha$ comprenant 9 à 11 atomes de carbone, les esters de l'acide (méth)acrylique d'alcool comprenant 1 à 15 atomes de carbone, qui contiennent encore 1 à 40% en poids d'éthylène,
la somme des quantités des monomères valant 100% en poids.

4. Enduit selon l'une des revendications 1 à 3, **caractérisé en ce que** le copolymère de styrène peut être obtenu par polymérisation en émulsion initiée par voie radicalaire d'une composition monomère contenant 40 à 59% en poids de styrène, 40 à 59% en poids d'un ou de plusieurs esters de l'acide acrylique et/ou méthacrylique avec des alcanols présentant 1 à 12 atomes de carbone et
1 à 10% en poids d'un monomère contenant des groupes acides, la somme des quantités de monomères valant 100% en poids.

5. Enduit selon l'une des revendications 1 à 4, **caractérisé en ce que** le copolymère de styrène peut être obtenu par polymérisation en émulsion initiée par voie radicalaire en présence de 10 à 80% en poids, par rapport à la quantité totale de copolymère de styrène, d'un amidon dégradé.

6. Enduit selon l'une des revendications 1 à 5, **caractérisé en ce que** le rapport pondéral du copolymère de styrène au polymère d'acétate de vinyle est de 80:20 à 90:10.

7. Enduit selon l'une des revendications 1 à 6, **caractérisé en ce qu'**au moins 80% en poids de la teneur totale en solides de l'enduit sont formés par un pigment inorganique.

8. Enduit selon l'une des revendications 1 à 7, **caractérisé en ce que** sa teneur en solides est de 30 à 80% en poids.

9. Procédé de préparation d'un enduit selon l'une des revendications 1 à 8, dans lequel on mélange (i) la dispersion aqueuse d'un ou de plusieurs polymères d'acétate de vinyle

(ii) la dispersion aqueuse d'un ou de plusieurs copolymères de styrène
(iii) des pigments inorganiques ainsi que
(iv) le cas échéant d'autres adjuvants,
(v) le cas échéant de l'eau,
la quantité totale des polymères en émulsion (i) et (ii) étant de 10 à 30 parties en poids par rapport à 100 parties en poids de pigment inorganique (iii) et
le rapport en poids du copolymère de styrène (ii) au polymère d'acétate de vinyle (i) étant de 77:23 à 93:7.

10. Utilisation de l'enduit selon l'une des revendications 1 à 8 pour la préparation d'un carton enduit présentant un grammage situé dans la plage de 150 à 600 g/m$^2$.

11. Procédé de préparation d'un carton enduit, dans lequel

   - on met à disposition un carton multicouche, qui présente un grammage de 150 à 600 g/m$^2$,
   - on applique sur au moins une surface de ce carton un enduit selon l'une des revendications 1 à 8 de telle sorte que le poids d'application de l'enduit, en tant que poids sec sur une surface du substrat, est de 5 à 30 g/m$^2$ et
   - on sèche ensuite le carton revêtu.

12. Carton enduit pouvant être obtenu selon le procédé selon la revendication 11.

13. Composition de liant contenant

   (i) une dispersion aqueuse d'un ou de plusieurs polymères d'acétate de vinyle, pouvant être obtenus par polymérisation en émulsion initiée par voie radicalaire de

      77 à 99% en poids d'acétate de vinyle,
      1 à 13% en poids d'éthylène et
      0 à 10% en poids d'un ou de plusieurs monomères éthyléniquement mono-insaturés, qui ne sont ni de l'acétate de vinyle, ni de l'éthylène,
      la somme des quantités des monomères valant 100% en poids,

   (ii) une dispersion aqueuse d'un ou de plusieurs copolymères de styrène, pouvant être obtenus par polymérisation en émulsion initiée par voie radicalaire d'une composition de monomères contenant 35 à 70% en poids de styrène,

      20 à 60% en poids d'un ou de plusieurs esters de l'acide acrylique et/ou méthacrylique avec des alcanols présentant 1 à 12 atomes de carbone ou d'un ou de plusieurs diènes aliphatiques conjugués,
      1 à 10% en poids d'un ou de plusieurs monomères contenant des groupes acides,
      la somme des quantités des monomères valant 100% en poids,
      le rapport en poids du copolymère de styrène au polymère d'acétate de vinyle étant de 77:23 à 93:7.

**IN DER BESCHREIBUNG AUFGEFÜHRTE DOKUMENTE**

**In der Beschreibung aufgeführte Patentdokumente**

- US 20080081175 A
- WO 2015155159 A
- WO 2015155157 A
- WO 2009156341 A
- WO 2012012231 A
- DE 102010063470
- US 20150125711 A
- WO 2009047233 A
- EP 2580257 A
- EP 2197925 A

**In der Beschreibung aufgeführte Nicht-Patentliteratur**

- **T.G. FOX.** *Bull. Am. Phys. Soc.,* 1956, vol. 1, 123
- Ullmann's Encyclopädie der technischen Chemie. Verlag Chemie, 1980, vol. 19, 18
- **J. BRANDRUP ; E.H. IMMERGUT.** Polymer Handbook. J. Wiley, 1966
- POLYMER HANDBOOK. J. Wiley, 1975
- POLYMER HANDBOOK. J. Wiley, 1989
- Ullmann's Encyclopedia of Industrial Chemistry. Verlag Chemie, 1992, 169
- Makromolekulare Stoffe. **HOUBEN-WEYL.** Methoden der organischen Chemie. Georg-Thieme-Verlag, 1961, vol. XIV/1, 411-420